(19) Europäisches Patentamt
European Patent Office
Office européen des brevets

(11) **EP 4 080 417 A1**

(12) **EUROPEAN PATENT APPLICATION**

(43) Date of publication:
**26.10.2022 Bulletin 2022/43**

(21) Application number: **21215952.9**

(22) Date of filing: **20.12.2021**

(51) International Patent Classification (IPC):
**G06N 5/00** (2006.01)    **G06N 7/00** (2006.01)
**G06N 3/04** (2006.01)

(52) Cooperative Patent Classification (CPC):
**G06N 5/003; G06N 7/005;** G06N 3/0445

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.04.2021 JP 2021070530**

(71) Applicant: **FUJITSU LIMITED**
**Kawasaki-shi, Kanagawa 211-8588 (JP)**

(72) Inventor: **Katayama, Kentaro**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

Remarks:
Amended claims in accordance with Rule 137(2) EPC.

(54) **PROGRAM, DATA PROCESSING METHOD AND DATA PROCESSING APPARATUS**

(57)    A program in which a computer searches for a combination of n elements and n assignment locations to which the n elements are assigned, performs a processing of performing and a searching. The performing includes performing processing of specifying a first element and a second element, calculating four local fields indicating a first change amount in a value of an evaluation function due to changes in values of four state variables in which the values change due to an exchange of the assignment locations, obtaining a second change amount in the value of the evaluation function when the exchange is made, based on the four local fields, and determining whether or not to execute the exchange based on the second change amount. The searching includes searching for the assignment states that minimize or maximize the value of the evaluation function by iterating the process.

FIG. 1

EP 4 080 417 A1

**Description**

[Technical Field]

The embodiments discussed herein are related to a program, a data processing method, and a data processing apparatus.

[Background Art]

The quadratic assignment problem (QAP) is one of the combinatorial optimization problems. The quadratic assignment problem is a problem for seeking for an assignment for assigning n elements (such as facilities) to n assignment locations with the aim of minimizing the total sum of products of costs between the elements (each being, for example, a flow amount such as an amount of supplies transported between two facilities) multiplied by the corresponding distances between the assignment locations to which the respective elements are assigned. For example, the quadratic assignment problem is a problem for searching for an assignment that satisfies the following Equation (1).

[Equation 1]

$$\min_{\phi \in S_n} \sum_i \sum_j f_{i,j} d_{\phi(i),\phi(j)} \qquad (1)$$

In Equation (1), $f_{i,j}$ denotes a cost between elements with identification numbers = i and j, $d_{\varphi(i),\varphi(j)}$ denotes a distance between assignment locations to which the elements with the identification numbers = i and j are assigned, and $S_n$ denotes a set of n assignment locations.

As an apparatus for calculating a large scale discrete optimization problem which is not well calculated by a von Neumann architecture computer, there is an Ising apparatus (also referred to as a Boltzmann machine) using an Ising type evaluation function (also referred to as an energy function or the like) (for example, PTL 1 and PTL 2).

The Ising apparatus converts a combinatorial optimization problem into an Ising model expressing behaviors of spins of magnetic elements. Based on the Markov chain Monte Carlo method such as a simulated annealing method or a replica exchange method (also referred to as a parallel tempering method or the like), the Ising apparatus searches for the state of the Ising model that minimizes the value of an Ising type evaluation function (equivalent to energy). The optimal solution is the state having the lowest minimum value among the minimum values of the evaluation function. By changing the sign of the evaluation function, the Ising apparatus is able to search for a state that maximizes the value of the evaluation function. The state of the Ising model may be expressed by a combination of the values of multiple state variables. Each of the state variables may use a value of 0 or 1.

The Ising type evaluation function is defined by, for example, the following Equation (2).

[Equation 2]

$$E = -\sum_{\langle i,j \rangle} W_{ij} x_i x_j - \sum_{i=1} b_i x_i + c \qquad (2)$$

The first term on the right side is the total sum of products each obtained from values (each being 0 or 1) of two state variables and a weight value (indicating an intensity of interaction between the two state variables) in one of all the combinations, without omission and duplication, of all the state variables in the Ising model. Here, $x_i$ is a state variable with an identification number i, $x_j$ is a state variable with an identification number j, and $W_{ij}$ is a weight value indicating the intensity of interaction between the state variables with the identification numbers i and j. The second term on the right side is the total sum of products each obtained from a bias coefficient and a state variable for one of the identification numbers. Here, $b_i$ denotes a bias coefficient for the identification number = i. Then, c is a constant.

An energy change amount ($\Delta E_i$) due to a change in the value of $x_i$ is expressed by the following Equation (3).

[Equation 3]

$$\Delta E_i = -\Delta x_i \left( \sum_j W_{ij} x_j + b_i \right) = -\Delta x_i h_i \qquad (3)$$

In Equation (3), $\Delta x_i$ is -1 when the state variable $x_i$ changes from 1 to 0, whereas $\Delta x_i$ is 1 when the state variable $x_i$ changes from 0 to 1. Then, $h_i$ is referred to as a local field and $\Delta E_i$ is the product of $h_i$ and a sign (+1 or -1) depending on $\Delta x_i$.

For example, when $\Delta E_i$ is smaller than a noise value (also referred to as thermal noise) obtained based on a random number and the value of a temperature parameter, a process of updating the value of $x_i$ to generate a state transition and updating the local fields is iterated.

Also, the above-described quadratic assignment problem may be calculated by using an Ising type evaluation function.

An Ising type evaluation function of the quadratic assignment problem may be expressed by the following Equation (4).

[Equation 4]

$$E = \frac{1}{2}x^T W x \qquad (4)$$

In Equation (4), x is a vector of state variables and expresses assignment states of n elements to n assignment locations. Here, $x^T$ is expressed as $(x_{1,1}, ..., x_{1,n}, x_{2,1}, ..., x_{2,n}, ..., x_{n,1}, ..., x_{n,n})$. Here, $x_{i,j} = 1$ indicates that an element with an identification number = i is assigned to an assignment location with an identification number = j, and $x_{i,j} = 0$ indicates that the element with the identification number = i is not assigned to the assignment location with the identification number = j.

Then, W is a matrix of weight values, and may be expressed by the following Equation (5) by using a cost ($f_{i,j}$) and a matrix D of distances between the n assignment locations as described above.

[Equation 5]

$$W = \begin{pmatrix} f_{1,1}D & f_{1,2}D & \cdots & f_{1,n}D \\ f_{2,1}D & f_{2,2}D & \cdots & f_{2,n}D \\ \vdots & \vdots & \ddots & \vdots \\ f_{n,1}D & f_{n,2}D & \cdots & f_{n,n}D \end{pmatrix} \qquad (5)$$

[Citation List]

[Patent Literature]

[PTL 1] Japanese Laid-open Patent Publication No. 2019-185602.
[PTL 2] Japanese Laid-open Patent Publication No. 2020-194442.

[Summary]

[Technical Problem]

According to the method of calculating a quadratic assignment problem using an Ising type evaluation function, the processes of calculating an energy change amount, updating the local fields, and so on are iterated many times. Therefore, it is desirable that a storage unit that stores information such as the weight values and the local fields to be used for these processes be accessible at high speed. However, in many cases, such a storage unit has a relatively small capacity. For this reason, when the scale of a problem is large, there is a possibility that the problem may not be calculated because such storage unit is incapable of storing all the information to be used for the calculation.

According to one aspect, an object of the present disclosure is to provide a program, a data processing method, and a data processing apparatus capable of calculating a large scale problem even when a storage unit having a relatively small capacity is used.

[Solution to Problem]

According to one aspect of the embodiment, a program in which a computer searches for a combination of n elements and n assignment locations to which the n elements are assigned, where n is an integer of 2 or more, performs processing to: performing a process that includes: specifying a first element and a second element among the n elements, reading n costs for each of the first element and the second element and n distances for each of a first assignment location of the first element and a second assignment location of the second element from a memory that stores costs between the n elements, distances between the n assignment locations, and assignment states of the n elements to the n assignment locations, calculating four local fields indicating a first change amount in a value of an evaluation function that is an Ising type evaluation function representing energy depending on the assignment states and including n2 state variables indicating the assignment states due to changes in values of four state variables in which the values change due to an exchange of the assignment locations between the first element and the second element among the n2 state variables, by using a total sum of products of the n costs and the respective n distances, obtaining a second change amount in the value of the evaluation function in a case where the exchange is made, based on the four local fields, a first cost between the first element and the second element among the n costs, and a first distance between the first assignment location and the second assignment location among the n distances, and determining whether or not to execute the exchange based on the second change amount and a predetermined value; searching for the assignment states that minimize or maximize the value of the evaluation function by iterating the process while changing an element pair serving as the first element and the second element.

Further, according to one aspect of the embodiment, a data processing method is provided. Further, according to one aspect of the embodiment, a data processing apparatus is provided.

[Effects of Invention]

According to one aspect of the present disclosure, a large scale problem may be calculated even when a storage unit having a relatively small capacity is used.

[Brief Description of Drawings]

FIG. 1 is a diagram illustrating an example of a data processing apparatus and a data processing method according to a first embodiment;
FIG. 2 is a diagram illustrating an example of calculation of a local field;
FIG. 3 is a diagram illustrating an example of matrices of weight values, costs, and distances;
FIG. 4 is a diagram illustrating an example of a problem for arranging three facilities at three locations;
FIG. 5 is a block diagram illustrating a hardware example of a data processing apparatus according to a second embodiment;
FIG. 6 is a block diagram illustrating an example of functions of the data processing apparatus;
FIG. 7 is a flowchart illustrating a sequence of an example of a data processing method according to the second embodiment; and
FIG. 8 is a diagram illustrating an example of a data processing apparatus according to a third embodiment.

[Description of Embodiments]

Hereinafter, the embodiments of the present disclosure will be described with reference to the drawings.
The quadratic assignment problem has a constraint that all elements are assigned to different assignment locations. This constraint may be considered as a constraint in which, when $n^2$ state variables indicating assignment states of n elements to n assignment locations in an Ising type evaluation function indicating energy depending on the assignment states are arranged in a matrix with n rows and n columns, the sum of the values of the state variables included in each of the rows and the columns is 1.
In the method of updating the state variables one by one based on $\Delta E_i$ in Equation (3), the calculation of the quadratic assignment problem having this constraint also involves a transition to states that do not satisfy the above constraint, and requests a long calculation time.
A conceivable way to shorten the calculation time is to exclude a transition to assignment states other than assignment states satisfying the above constraint. In this case, the values of four state variables are changed in one state transition. When $n^2$ state variables are arranged in n rows and n columns, the values of four state variables are changed in one state transition so as to satisfy the constraint that the sum of the values of the state variables included in each of the rows and the columns is 1. This makes it possible to exclude a transition to assignment states other than the assignment states satisfying the above constraint.
When a state variable $x_b$ having a value of 0 is an update target candidate, state variables $x_a$ and $x_d$ each having a value of 1 are update target candidates among the state variables included in the same row and the same column as those of $x_b$. In addition, $x_c$ having a value of 0 in the same column as that of $x_a$ and the same row as that of $x_d$ is an update target candidate.

When $\Delta E_b$ denotes an energy change amount of the Ising model due to changes in the values of these four state variables, $\Delta E_b$ is expressed by the following Equation (6). Here, $h_a$ denotes an energy change amount due to a change in $x_a$, $h_b$ denotes an energy change amount due to a change in $x_b$, $h_c$ denotes an energy change amount due to a change in $x_c$, and $h_d$ denotes an energy change amount due to a change in $x_d$.

[Equation 6]

$$\Delta E_b = (h_a + h_d) - (h_b + h_c) - (W_{ad} + W_{bc}) \qquad (6)$$

A local field change amount ($\Delta h_m$ (m = 1, 2, ..., $n^2$)) due to the changes in $x_a$, $x_b$, $x_c$, and $x_d$ is expressed by the following Equation (7).

[Equation 7]

$$\Delta h_m = W_{bm} + W_{cm} - (W_{am} + W_{dm}) \qquad (7)$$

As presented in Equations (6) and (7), the weight values are used to calculate the energy change amount and update the local fields. Since the weight values are expressed by Equation (5), the storage unit may store the costs between the n elements and the distances between the n assignment locations instead of storing the $n^2 \times n^2$ weight values themselves. An energy change amount due to an exchange of the assignment locations between an element with an identification number = i and an element with an identification number = j is expressed by the following Equation (8) into which Equation (6) is transformed.

[Equation 8]

$$\Delta E = h_a + h_d - h_b - h_c + 2 \cdot f_{i,j} \cdot d_{\phi(i),\phi(j)} \qquad (8)$$

In Equation (8), $\varphi(i)$ is an identification number of an assignment location of the element with the identification number = i, and $\varphi(j)$ is an identification number of an assignment location of the element with the identification number = j.

A change amount ($\Delta H$) in the local fields (matrix H) in n rows and n columns is expressed by the following Equation (9).

[Equation 9]

$$\Delta H = \Delta F \Delta D = (f_{,j} - f_{,i})(d_{\phi(i),} - d_{\phi(j),}) \qquad (9)$$

In Equation (9), $f_{,j}$ denotes all the costs in a j-th column in costs (matrix F) in n rows and n columns, and $f_{,i}$ denotes all the costs in an i-th column in the matrix F. Then, $d_{\phi(i),}$ denotes all the distances in a $\varphi(i)$-th row in distances (matrix D) in n rows and n columns, and $d_{\phi(j),}$ denotes all the distances in the $\varphi(j)$-th row in the matrix D.

When the calculation of the energy change amount and the update of the local fields are performed by using Equations (8) and (9), the storage unit does not have to store the $n^2 \times n^2$ weight values themselves. However, when the scale of a problem is increased, the data volumes of the matrix H, the matrix F, and the matrix D are also increased. For this reason, a storage unit being accessible at high speed but having a relatively small capacity, such as a storage unit including a static random-access memory (SRAM), a flip-flop, or the like, may be incapable of storing all of the matrix H, the matrix F, and the matrix D.

A data processing apparatus and a data processing method according to a first embodiment to be described below are capable of calculating a large scale problem even when a storage unit having a relatively small capacity is used.

(First Embodiment)

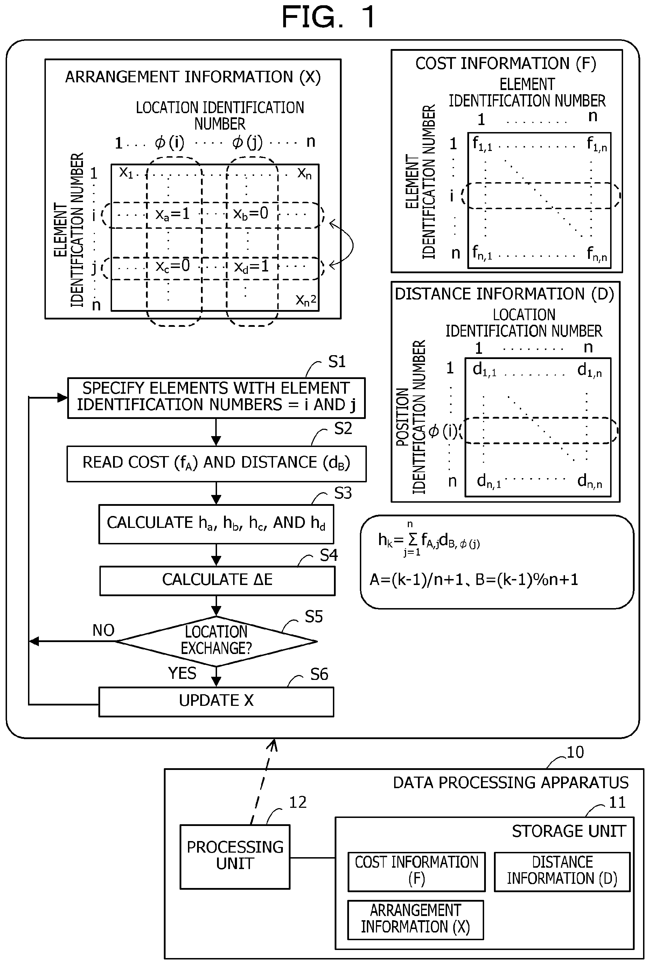

FIG. 1 is a diagram illustrating an example of a data processing apparatus and a data processing method according to the first embodiment.

A data processing apparatus 10 is, for example, a computer, and includes a storage unit 11 and a processing unit 12.

The storage unit 11 is, for example, a volatile storage device including an electronic circuit such as a dynamic random-access memory (DRAM) or a non-volatile storage device including an electronic circuit such as a hard disk drive (HDD) or a flash memory.

For example, the storage unit 11 stores a program for performing processing to be described later and also stores cost information, distance information, and arrangement information.

The cost information contains costs between n elements (n is an integer of 2 or more), and is expressed by a matrix F with n rows and n columns.

FIG. 1 illustrates an example of the cost information. The row numbers and the column numbers in the matrix F correspond to element identification numbers for identifying the respective elements. For example, the cost between the element with the element identification number = 1 and the element with the element identification number = n (the cost at the first row in the n-th column) is expressed as $f_{1,n}$.

The distance information contains distances between the n assignment locations to which the n elements are assigned, and is expressed by a matrix D with n rows and n columns. Hereinafter, the assignment location is referred to as a location. FIG. 1 illustrates an example of the distance information. The row numbers and the column numbers in the matrix D correspond to location identification numbers for identifying the respective locations. For example, a distance between the location with the location identification number = 1 and the location with the location identification number = n (distance at the first row in the n-th column) is expressed as $d_{1,n}$.

For example, the cost information and the distance information are input from outside of the data processing apparatus 10 and stored in the storage unit 11.

The arrangement information indicates the locations to which the n elements are assigned (arranged), and indicates assignment states of the n elements to the n locations. The arrangement information is expressed by a matrix X with n rows and n columns including $n^2$ state variables. The initial values in the arrangement information are input from outside of the data processing apparatus 10 and stored in the storage unit 11, for example. The initial values in the arrangement information are set so as to satisfy the constraint that the sum of the values of the state variables included in each of the rows and the columns is 1. For example, this is intended to arrange each of the n elements at any one of the n locations.

FIG. 1 illustrates an example of the arrangement information. In the matrix X, the row numbers correspond to the element identification numbers, and the column numbers correspond to the location identification numbers. The row numbers and the column numbers may be exchanged such that the row numbers correspond to the location identification numbers, and the column numbers correspond to the element identification numbers. In this case, the rows and the columns in the matrix X in the following description will be read as the columns and the rows.

In the example illustrated in FIG. 1, the state variable $x_a$ at the i-th row in the $\varphi(i)$-th column has a value of 1. This indicates that the element with the element identification number = i is arranged at the location with the location identification number = $\varphi(i)$. In the example illustrated in FIG. 1, the state variable $x_d$ at the j-th row in the $\varphi(j)$-th column has a value of 1. This indicates that the element with the element identification number = j is arranged at the location with the location identification number = $\varphi(j)$.

The arrangement information may be expressed by a row vector (one-dimensional array) including a sequence of location identification numbers (the column numbers in the example in FIG. 1) of the locations at which the n elements are arranged.

For example, the processing unit 12 may be implemented by a processor that is a piece of hardware such as a central processing unit (CPU), a graphics processing unit (GPU) or a digital signal processor (DSP). Instead, the processing unit 12 may be implemented by an electronic circuit such as an application-specific integrated circuit (ASIC) or a field-programmable gate array (FPGA). The processing unit 12 executes a program stored in the storage unit 11 to cause the data processing apparatus 10 to perform the following processing. The processing unit 12 may be a set of multiple processors.

For example, the processing unit 12 searches for assignment states that minimize the value (energy) of the evaluation function expressed by Equation (2) by iterating the process of exchanging the arrangement locations between two elements. The optimal solution is the assignment states having the lowest minimum value among the minimum values of the evaluation function. By changing the sign of the evaluation function expressed by Equation (2), the processing unit 12 may search for the assignment states that maximize the value of the evaluation function (in this case, the greatest maximum value indicates the optimal solution).

FIG. 1 illustrates an example of a sequence of a part of processing (data processing method) of a program executed by the processing unit 12.

Step S1: The processing unit 12 specifies two elements (the elements with element identification numbers = i and j in the example illustrated in FIG. 1) among n elements as targets for determining whether or not to exchange the arrangement locations.

Step S2: From the storage unit 11, the processing unit 12 reads n costs for each of the two specified elements and n distances for each of the two arrangement locations where the two elements are arranged. By referring to the arrangement information, the processing unit 12 detects the arrangement locations of the two elements.

For example, in the example illustrated in FIG. 1, the element with the element identification number = i is arranged at the location with the location identification number = $\varphi(i)$, and the element with the element identification number = j is arranged at the location with the location identification number $\varphi(j)$. In this case, for the element with the element identification number = i, the n costs belonging to the row (or the column) corresponding to the element identification number = i are read from the matrix F of the cost information as illustrated in FIG. 1. For the location with the location identification number = $\varphi(i)$, the n distances belonging to the row (or the column) corresponding to the location identification number = $\varphi(i)$ are read from the matrix D of the distance information as illustrated in FIG. 1.

Although not illustrated, for the element with the element identification number = j, the n costs belonging to the row (or the column) corresponding to the element identification number = j are read from the matrix F. For the location of the location identification number = $\varphi(j)$, the n distances belonging to the row (or the column) corresponding to the location identification number = $\varphi(j)$ are read from the matrix D.

The rows (or columns) to which the costs or distances read as described above belong may also be expressed by using the identification numbers of the state variables whose values change due to an exchange between the two elements.

For example, as illustrated in FIG. 1, when the arrangement locations are exchanged between the elements with the element identification numbers = i and j, the values of the four state variables $x_a$, $x_b$, $x_c$, and $x_d$ change. Here, $x_a$ is a state variable at the i-th row in the $\varphi(i)$-th column, $x_b$ is a state variable at the i-th row in the $\varphi(j)$-th column, $x_c$ is a state variable at the j-th row in the $\varphi(i)$-th column, and $x_d$ is a state variable at the j-th row in the $\varphi(j)$-th column.

When $x_k$ (k = 1, 2, ..., $n^2$) denotes one of $x_a$, $x_b$, $x_c$, and $x_d$, a row number A in the matrix F to which n costs ($f_{A,}$) read for $x_k$ belong may be expressed as A = (k-1)/n + 1 (digits to the right of the decimal point are discarded). The row number A corresponds to an element identification number indicating a row to which $x_k$ belongs in the matrix X.

A row number B in the matrix D to which the n distances ($d_{B,}$) read for $x_k$ belong may be expressed as B = (k-1)%n + 1. Here, (k-1)%n is a remainder of (k-1) divided by n. The row number B corresponds to a location identification number indicating a column to which $x_k$ belongs in the matrix X.

Step S3: The processing unit 12 calculates four local fields $h_a$, $h_b$, $h_c$, and $h_d$ in Equation (8). Here, $h_a$ denotes an energy change amount due to a change in the value of $x_a$ in FIG. 1, and $h_b$ denotes an energy change amount due to a change in the value of $x_b$ in FIG. 1. Further, $h_c$ denotes an energy change amount due to a change in the value of $x_c$ in FIG. 1, and $h_d$ denotes an energy change amount due to a change in the value of $x_d$ in FIG. 1. Each local field may be calculated by using the read n costs and n distances in accordance with the following Equation (10) instead of Equation (3).

[Equation 10]

$$h_k = \sum_{j=1}^{n} f_{A,j} d_{B,\phi(j)} \qquad (10)$$

In Equation (10), $\varphi(j)$ is an array of column numbers in which the state variables each having a value of 1 are located at the respective rows in the matrix X. The reason why the local field may be calculated by such Formula (10) will be described below.

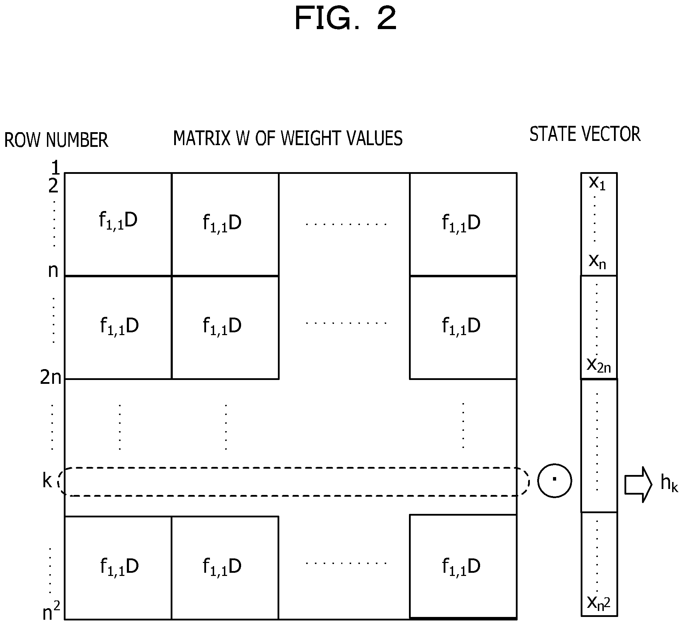

FIG. 2 is a diagram illustrating an example of calculation of a local field.

In the quadratic assignment problem, $b_i$ in Equation (3) is 0. Accordingly, a local field $h_k$ for $x_k$ may be expressed by the following Equation (11).

[Equation 11]

$$h_k = \sum_{j=1}^{n \times n} W_{kj} x_j \qquad (11)$$

For example, the local field $h_k$ for $x_k$ may be expressed by a product of a k-th row in the matrix W of the weight values and a state vector including $n^2$ state variables. The state vector is a vector in which each of the rows in the matrix X expressing the arrangement information illustrated in FIG. 1 are arrayed one-dimensionally. As described above, the sum of the values of the state variables included in each of the rows and the columns in the matrix X is 1 under the constraint of the quadratic assignment problem. Therefore, also in the state vector, every n state variables include only one state variable having a value of 1.

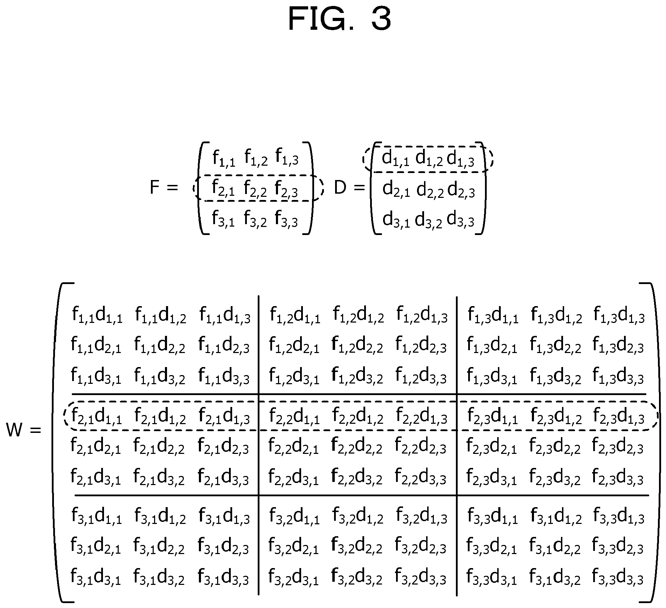

FIG. 3 is a diagram illustrating an example of matrices of weight values, costs, and distances. FIG. 3 illustrates a matrix W of weight values, a matrix F of costs, and a matrix D of distances in a case where n = 3.

The weight values to be used to calculate $h_k$ are at the k-th row in the matrix W. Thus, in a case where k = 4, the weight values at the fourth row as illustrated in FIG. 3, $W_4 = (f_{2,1}d_{1,1}, f_{2,1}d_{1,2}, f_{2,1}d_{1,3}, f_{2,2}d_{1,1}, f_{2,2}d_{1,2}, f_{2,2}d_{1,3}, f_{2,3}d_{1,1}, f_{2,3}d_{1,2}, f_{2,3}d_{1,3})$ are, for example, used. For example, $W_4$ may be calculated from the costs at the second row in the matrix F and the distances at the first row in the matrix D. Accordingly, in each of the matrices D and F, the costs or the distances at one row are used for the calculation.

According to the state vector, $h_4$ may be expressed as follows, for example.

As a first example, the state vector is assumed to be $x^T = (1\ 0\ 0\ 0\ 1\ 0\ 0\ 0\ 1)$. In this case, $h_4$ may be calculated as $h_4 = 1 \times f_{2,1}d_{1,1} + 0 \times f_{2,1}d_{1,2} + 0 \times f_{2,1}d_{1,3} + 0 \times f_{2,2}d_{1,1} + 1 \times f_{2,2}d_{1,2} + 0 \times f_{2,2}d_{1,3} + 0 \times f_{2,3}d_{1,1} + 0 \times f_{2,3}d_{1,2} + 1 \times f_{2,3}d_{1,3} = f_{2,1}d_{1,1} + f_{2,2}d_{1,2} + f_{2,3}d_{1,3}$.

As a second example, the state vector is assumed to be $x^T = (0\ 1\ 0\ 0\ 0\ 1\ 1\ 0\ 0)$. In this case, the $h_4$ may be calculated as $h_4 = 0 \times f_{2,1}d_{1,1} + 1 \times f_{2,1}d_{1,2} + 0 \times f_{2,1}d_{1,3} + 0 \times f_{2,2}d_{1,1} + 0 \times f_{2,2}d_{1,2} + 1 \times f_{2,2}d_{1,3} + 1 \times f_{2,3}d_{1,1} + 0 \times f_{2,3}d_{1,2} + 0 \times f_{2,3}d_{1,3} = f_{2,1}d_{1,2} + f_{2,2}d_{1,3} + f_{2,3}d_{1,1}$.

Here, the above $\varphi(j)$ is $\varphi(j) = [1, 2, 3]$ in the first example and $\varphi(j) = [2, 3, 1]$ in the second example, and is equal to the array of the column numbers of the distances that is the multipliers for the costs in the j-th column. For example, in the first example, the multiplier for the cost $f_{2,1}$ in the first column is $d_{1,1}$ in the first column, the multiplier for the cost $f_{2,2}$ in the second column is $d_{1,2}$ in the second column, and the multiplier for the cost $f_{2,3}$ in the third column is $d_{1,3}$ in the third column. In the second example, the multiplier for the cost $f_{2,1}$ in the first column is $d_{1,2}$ in the second column, the multiplier for the cost $f_{2,2}$ in the second column is $d_{1,3}$ in the third column, and the multiplier for the cost $f_{2,3}$ in the third column is $d_{1,1}$ in the first column.

The use of $\varphi(j)$ as described above makes it possible to select a distance as a multiplier for each of the costs in the j-th column. From the above, $h_k$ may be calculated in accordance with Equation (10).

Here, in the processes at steps S2 and S3, the processing unit 12 may iterate the processing of reading $f_{A,j}$ and $d_{B,\varphi(j)}$ from the storage unit 11 and calculating $f_{A,j}d_{B,\varphi(j)}$ for a certain j in Equation (10), and then reading $f_{A,j}$ and $d_{B,\varphi(j)}$ from the storage unit 11 for the next j. In this case, the processing unit 12 calculates, as $h_k$, a total sum of n $f_{A,j}d_{B,\varphi(j)}$ obtained by n iterations of the processing.

Step S4: In accordance with Equation (8), the processing unit 12 calculates $\Delta E$ in a case where an exchange of the arrangement locations is made between two elements with the element identification numbers = i and j. The values calculated in the process at step S3 are used for $h_a$, $h_b$, $h_c$, and $h_d$ in Equation (8). The values for $f_{i,j}$ and $d_{\varphi(i),\varphi(j)}$ in Equation (8) are included in the n costs and/or the n distances read in the process at step S2.

Step S5: Based on a result of comparison between $\Delta E$ and a predetermined value, the processing unit 12 determines whether or not to make an exchange of the arrangement locations between the two elements with the element identification numbers = i and j. For example, the predetermined value is a noise value obtained based on a random number and the value of a temperature parameter.

For example, the processing unit 12 determines to make the exchange when $\Delta E$ is smaller than $\log(rand) \times T$, which is an example of a noise value obtained based on a uniform random number (rand) between 0 and 1, both inclusive, and the temperature parameter (T).

Step S6: When determining to make the exchange in the process at step S5, the processing unit 12 executes the exchange by updating the arrangement information.

After the process at step S6 or when determining not to make the exchange in the process at step S5, the processing unit 12 returns to the process at step S1, updates the element identification numbers = i and j (changes an element pair for the exchange determination), and iterates the processes from step S2.

The element identification numbers = i and j may be specified randomly or according to a predetermined rule.

In a case of performing the simulated annealing method, the processing unit 12 decreases the value of the aforementioned temperature parameter (T) according to a predetermined schedule for temperature parameter change. The processing unit 12 outputs the arrangement information obtained by a predetermined number of iterations of the processes at steps S1 to S6, as a calculation result of the quadratic assignment problem (for example, displays the arrangement information on a display device not illustrated). The processing unit 12 may update the value of the evaluation function (energy) expressed by Equation (4) every time the arrangement locations of the elements are updated, and hold the energy and the arrangement information in the case where the energy becomes the minimum up to that time. In this case, the processing unit 12 may output, as the calculation result, the arrangement information associated with the minimum energy stored after the predetermined number of iterations of the processes at steps S1 to S6.

In the case of performing the replica exchange method, the processing unit 12 performs the processes at steps S1 to S6 illustrated in FIG. 1 in each of multiple replicas in which different values of the temperature parameter are set. Every a predetermined number of iterations of the processes at steps S1 to S6, the processing unit 12 performs replica exchange. For example, the processing unit 12 randomly selects two replicas among the multiple replicas, and exchanges the values of the temperature parameter or the arrangement information between the two selected replicas with a predetermined exchange probability based on an energy difference between the replicas and a difference in the value of the temperature parameter between the replicas. For example, the processing unit 12 updates the value (energy) of the evaluation function expressed by Equation (4) every time the arrangement locations of the elements are updated in each replica, and holds the energy and the arrangement information in the case where the energy becomes the minimum up to that time. The processing unit 12 outputs, as the calculation result, the arrangement information associated with the lowest minimum energy in all the replicas among the minimum energies stored after the predetermined number of iterations of the processes at steps S1 to S6 in the respective replicas.

According to the data processing apparatus 10 and the data processing method as described above, the local fields to be used for calculating $\Delta E$ are not stored in the storage unit 11, but are calculated from the costs and the distances concerning two elements as targets for determining whether or not to exchange the arrangement locations, and the arrangement locations of the two elements. For this reason, the storage unit 11 does not have to store the local fields (also the weight values), and a large scale problem may be calculated even when the storage unit 11 is a small-capacity memory. For example, the storage capacity of the storage unit 11 may be reduced. In a case where the replica exchange method is performed, different local fields are used among the replicas. According to the data processing apparatus 10 and the data processing method described above, the storage unit 11 does not have to store the local fields themselves. For this reason, in the case where the replica exchange method is used, the effect of reducing the data volume stored in the storage unit 11 is higher than that in the case where the simulated annealing method is used.

If the local fields were stored, the $n^2$ local fields would be updated in accordance with Formula (9) every time the arrangement information is updated. In contrast, the data processing apparatus 10 and the data processing method described above do not have to update of the local fields. This may reduce the amount of computation as compared with the case where the local fields are stored.


(Second Embodiment)

In a second embodiment to be described below, a quadratic assignment problem for assigning n elements to n assignment locations will be described by taking, as an example, a problem for arranging n facilities at n locations. Hereinafter, the above-described cost will be referred to as a flow amount. The flow amount indicates, for example, an amount of supplies transported between facilities or the like.

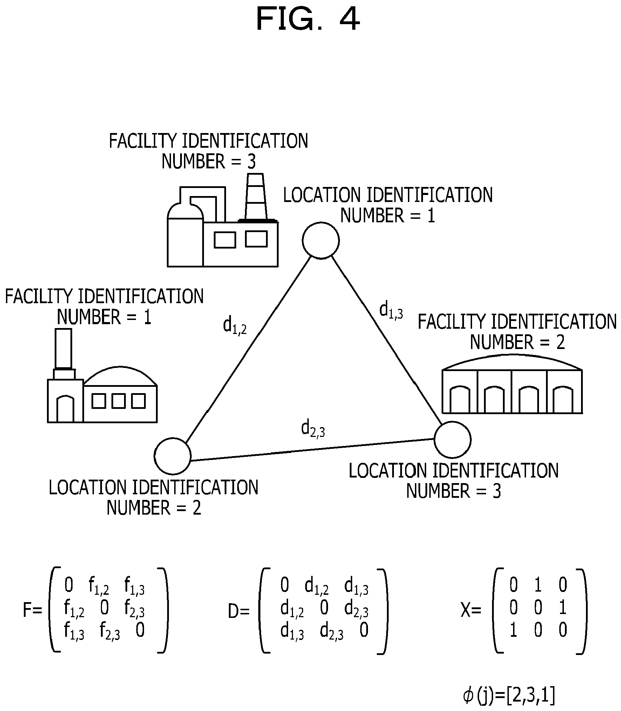

FIG. 4 is a diagram illustrating an example of a problem for arranging three facilities at three locations.

In the case of this example, a matrix F includes flow amounts in 3 rows and 3 columns, and a matrix D includes distances in 3 rows and 3 columns. In the example of FIG. 4, $f_{i,j}$ is equal to $f_{j,i}$ (i and j are facility identification numbers), and $f_{j,i}$ is also expressed as $f_{i,j}$. In the example of FIG. 4, $d_{i,j}$ is equal to $d_{j,i}$ (i and j are location identification numbers), and $d_{j,i}$ is also expressed as $d_{i,j}$.

In the example of FIG. 4, a facility with a facility identification number = 3 is arranged at a location with a location identification number = 1, a facility with a facility identification number = 1 is arranged at a location with a location identification number = 2, and a facility with a facility identification number = 2 is arranged at a location with a location identification number = 3. In this case, in arrangement information (matrix X) in which the row numbers indicate the facility identification numbers and the column numbers indicate the location identification numbers, the state variables at the first row in the second column, the second row in the third column, and the third row in the first column have a value of 1 and the other state variables have a value of 0. In this case, $\varphi(i)$ described above is expressed as $\varphi(j) = [2, 3, 1]$.

For such a problem, an arrangement that minimizes the energy is searched for based on an energy change amount (expressed by Equation(8) described above) due to an exchange of the arrangement locations between two facilities, but the data volume to be stored increases as the number of facilities or the number of locations increases.

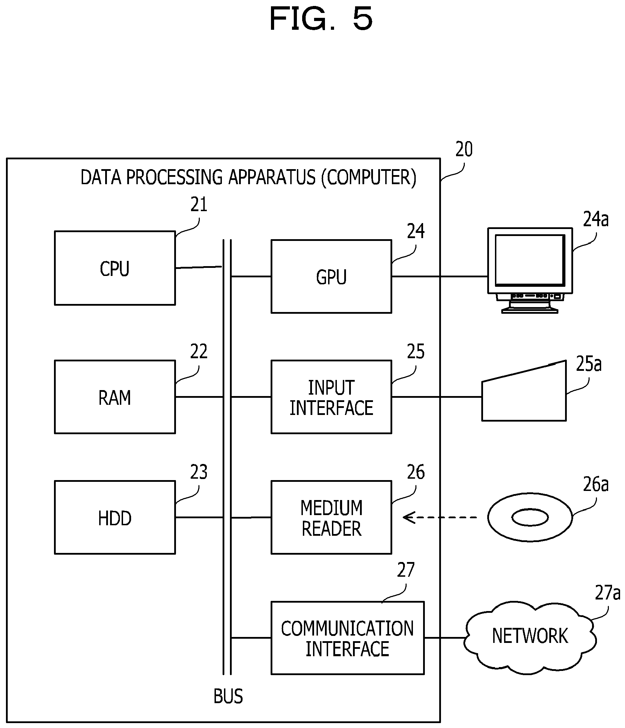

FIG. 5 is a block diagram illustrating a hardware example of a data processing apparatus according to the second embodiment.

A data processing apparatus 20 is, for example, a computer, and includes a CPU 21, a random-access memory (RAM) 22, an HDD 23, a GPU 24, an input interface 25, a medium reader 26, and a communication interface 27. The above-described units are coupled to a bus.

The CPU 21 is a processor including an arithmetic circuit that executes program commands. The CPU 21 loads at least a part of a program and data stored in the HDD 23 into the RAM 22 and executes the program. The CPU 21 may include multiple processor cores, or the data processing apparatus 20 may include multiple processors. The processes to be described below may be executed in parallel by using the multiple processors or processor cores. A set of multiple processors (multiprocessor) may be referred to as a "processor".

The RAM 22 is a volatile semiconductor memory that temporarily stores a program executed by the CPU 21 or data used for computation by the CPU 21. The data processing apparatus 20 may include a memory of a type other than the RAM 22, and may include multiple memories.

The HDD 23 is a non-volatile storage device that stores a software program such as an operating system (OS), middleware, and application software, and data. Examples of the program include a program for causing the data processing apparatus 20 to execute a process of searching for a solution to a quadratic assignment problem. The data processing apparatus 20 may include another type of storage device such as a flash memory or a solid-state drive (SSD), and may include multiple non-volatile storage devices.

The GPU 24 outputs images to a display 24a coupled to the data processing apparatus 20 in accordance with instructions from the CPU 21. As the display 24a, a cathode ray tube (CRT) display, a liquid crystal display (LCD), a plasma display panel (PDP), an organic electro-luminescence (OEL) display, or the like may be used.

The input interface 25 acquires an input signal from an input device 25a coupled to the data processing apparatus 20 and outputs the input signal to the CPU 21. As the input device 25a, a pointing device such as a mouse, a touch panel, a touchpad, and a trackball, as well as a keyboard, a remote controller, a button switch, or the like may be used. Multiple types of input devices may be coupled to the data processing apparatus 20.

The medium reader 26 is a reading device that reads a program or data recorded on a recording medium 26a. As the recording medium 26a, for example, a magnetic disk, an optical disk, a magneto-optical (MO) disk, a semiconductor memory, or the like may be used. The magnetic disks include a flexible disk (FD) and an HDD. The optical disks include a compact disc (CD) and a Digital Versatile Disc (DVD).

For example, the medium reader 26 copies a program or data read from the recording medium 26a to another recording medium such as the RAM 22 and the HDD 23. For example, the read program is executed by the CPU 21. The recording medium 26a may be a portable recording medium, and may be used to distribute a program or data. The recording medium 26a and the HDD 23 may be referred to as computer-readable recording media.

The communication interface 27 is an interface that is connected to a network 27a and that communicates with another information processing apparatus via the network 27a. The communication interface 27 may be a wired communication interface coupled to a communication device such as a switch via a cable, or may be a wireless communication interface coupled to a base station via a wireless link.

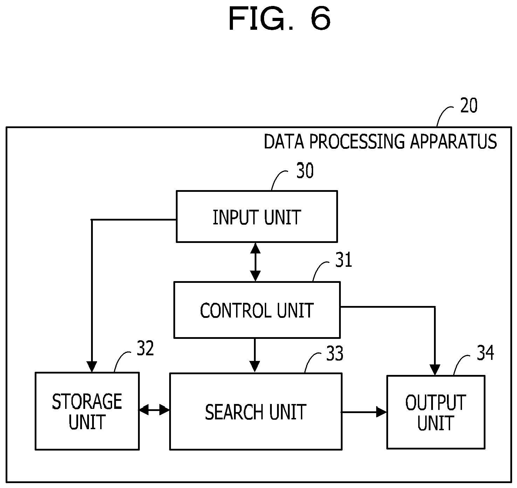

FIG. 6 is a block diagram illustrating an example of functions of the data processing apparatus.

The data processing apparatus 20 includes an input unit 30, a control unit 31, a storage unit 32, a search unit 33, and an output unit 34.

For example, the input unit 30, the control unit 31, the search unit 33, and the output unit 34 may be implemented by using program modules executed by the CPU 21. The storage unit 32 may be implemented by using a storage area reserved in the RAM 22 or the HDD 23, for example.

For example, the input unit 30 receives input of problem information (such as flow amounts between facilities and distances between locations) of a quadratic assignment problem, and calculation conditions (such as, in a case where the replica exchange method is performed, for example, the number of replicas and a value of a temperature parameter set for each replica). These pieces of information may be input by a user operating the input device 25a, or may be input via the recording medium 26a or the network 27a.

The control unit 31 controls the units in the data processing apparatus 20 to cause the units to execute processing to be described later.

The storage unit 32 stores various kinds of information such as the problem information, the calculation conditions, each of the values of state variables, and the calculation results of energy.

For example, the search unit 33 searches for arrangement information that minimizes the value (energy) of the evaluation function expressed by Equation (2) by iterating the process of exchanging the arrangement locations between two elements.

For example, the output unit 34 outputs the arrangement information obtained by the search by the search unit 33 as a calculation result. For example, the output unit 34 may output and display the calculation result on the display 24a, may transmit the calculation result to another information processing apparatus via the network 27a, or may store the calculation result in an external storage device.

Next, a processing procedure of the data processing apparatus 20 will be described. A data processing method to which the replica exchange method is applied will be described in the following example.

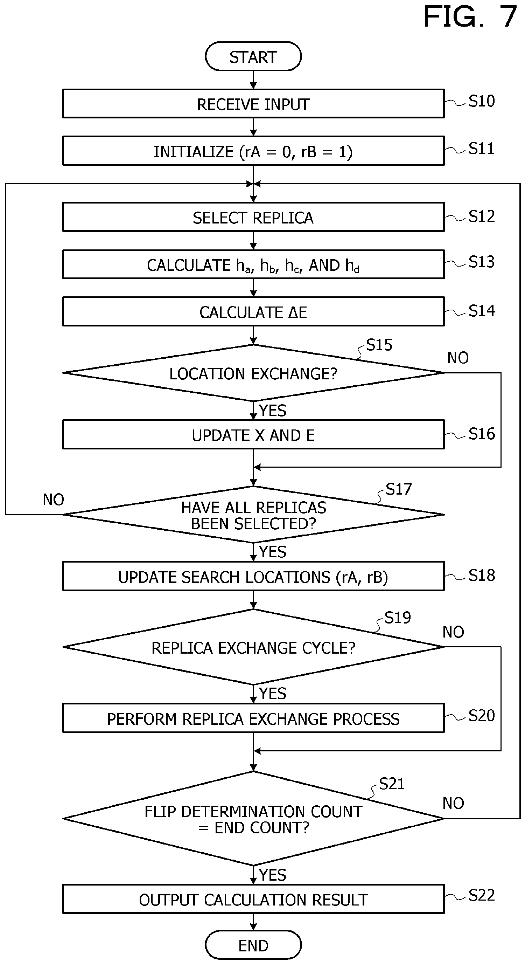

FIG. 7 is a flowchart illustrating a sequence of an example of the data processing method according to the second embodiment.

Step S10: First, the input unit 30 receives input of the problem information and so on for a quadratic assignment problem. For example, the problem information may be input by the user operating the input device 25a, or may be input via the recording medium 26a or the network 27a. The input problem information is stored in the storage unit 32.

Step S11: The control unit 31 performs initialization. For example, the control unit 31 sets the initial values of the state variables so as to satisfy the constraint that the sum of the values of the state variables included in each of the n rows and the n columns is 1. The control unit 31 calculates an initial value of energy in accordance with Equations (4) and (5) based on the initial values of the state variables and the problem information. Further, the control unit 31 sets the initial value of the temperature parameter for each replica. As the value of the temperature parameter, different values are set among the replicas.

The control unit 31 initializes search locations (rA, rB) for specifying two facilities for determining whether or not to exchange the arrangement locations (hereafter referred to as flip determination). For example, the control unit 31 sets rA = 0 and rB = 1. Each of rA and rB specifies a facility identification number (a row number in the matrix X in the example of FIG. 4). For example, rA = 0 indicates a facility identification number = 1 (row number = 1), and rB = 1 indicates a facility identification number = 2 (row number = 2).

Step S12: The control unit 31 selects one of the multiple replicas.

Step S13: In accordance with Equation (10), the search unit 33 calculates four local fields $h_a$, $h_b$, $h_c$, and $h_d$ in a case where an exchange of the arrangement locations is made between the facilities with the facility identification numbers specified by rA and rB.

For example, the search unit 33 calculates $h_a$, $h_b$, $h_c$, and $h_d$ by the following process. Hereinafter, state [i] denotes the column number of a column in which the value of the state variable is 1 at the (i+1)-th row (i = 0, 1, ..., n-1) in the matrix X. Then, F[y][x] denotes a flow amount at the (y+1)-th row in the (x+1)-th column in the matrix F, and D[y][x] denotes a distance at the (y+1)-th row in the (x+1)-th column in the matrix D. Here, x, y = 0, 1, ..., n-1. For each of $h_a$, $h_b$, $h_c$, and $h_d$, n flow amounts and n distances to be used for the calculation are read from the storage unit 32.

First, the search unit 33 sets $h_a = h_b = h_c = h_d = 0$ and i = 0.

By using temporary variables fA, fB, dA, and dB, the search unit 33 sets fA = F[rA][i], fB = f[rB][i], dA = D[state [i]][state [rA]], and dB = D[state [i]][state [rB]].

After that, the search unit 33 adds fAxdB to $h_a$, adds fAxdA to $h_b$, adds fBxdB to $h_c$, and adds fBxdA to $h_d$. The search unit 33 increments i by 1 and iterates the above-described process until i reaches n-1.

Step S14: Based on Equation (8), the search unit 33 calculates the change amount of the value of the evaluation function (the energy change amount ($\Delta E$)) in a case where an exchange of the arrangement locations is made between the facilities with the facility identification numbers specified by rA and rB. The values calculated in the process at step S13 are used for $h_a$, $h_b$, $h_c$, and $h_d$ in Equation (8). Then, F[rA][rB] is used for $f_{i,j}$ in Equation (8), and D[state [rA]][state [rB]] is used for $d_{\varphi(i),\varphi(j)}$ in Equation (8).

Step S15: Based on a result of comparison between $\Delta E$ and the noise value obtained based on the random number and the value of the temperature parameter set for the selected replica, the search unit 33 performs the flip determination as to whether or not to make the exchange of the arrangement locations between the facilities with the facility identification numbers specified by rA and rB.

For example, the search unit 33 determines to make the exchange when $\Delta E$ is smaller than log(rand)xT, which is an example of a noise value obtained based on a uniform random number (rand) between 0 and 1, both inclusive, and the temperature parameter (T). The search unit 33 performs a process at step S16 when determining to make the exchange, or performs a process at step S17 when determining not to make the exchange.

Step S16: The search unit 33 updates the arrangement information by exchanging the values of state [rA] and state [rB]. The search unit 33 updates the energy (E) by adding $\Delta E$.

Step S17: The control unit 31 determines whether or not all the replicas have been selected. When determining that all the replicas have not been selected, the control unit 31 returns to the process at step S12, and causes the search unit 33 to perform the processes at steps S13 to S16 for an unselected replica. When determining that all the replicas have been selected, the control unit 31 performs a process at step S18.

Step S18: The control unit 31 updates the search locations. For example, in the case where rB = n-1 and rA = n-2, the control unit 31 initializes rA and rB to rA = 0 and rB = 1. In the case where rB = n-1 but rA ≠ n-2, the control unit 31 increments rA by 1 and sets rB = rA+1. In a case where rB ≠ n-1, the control unit 31 increments rB by 1.

Step S19: The control unit 31 determines whether or not a flip determination count indicates a replica exchange cycle. For example, when a remainder of the flip determination count divided by a value indicating the replica exchange cycle is 0, the control unit 31 determines that the flip determination count indicates the replica exchange cycle.

The control unit 31 performs a process at step S20 when determining that the flip determination count indicates the replica exchange cycle, or performs a process at step S21 when determining that the flip determination count does not indicate the replica exchange cycle.

Step S20: The control unit 31 performs a replica exchange process. For example, the control unit 31 randomly selects two of the multiple replicas, and exchanges the set values of the temperature parameter between the two selected replicas with a predetermined exchange probability based on an energy difference between the replicas or a difference in the value of the temperature parameter between the replicas.

Instead of exchanging the values of the temperature parameter between the two replicas, the replica exchange process may exchange the arrangement information.

Step S21: The control unit 31 determines whether or not the flip determination count reaches a predetermined end count. The control unit 31 performs a process at step S22 when determining that the flip determination count reaches the predetermined end count, or iterates the processes from step S12 when determining that the flip determination count does not reach the predetermined end count.

Step S22: The output unit 34 outputs a calculation result. For example, the output unit 34 outputs, as the calculation result, the arrangement information associated with the lowest minimum energy in all the replicas among the minimum energies stored for the respective replicas. For example, the output unit 34 may output and display the calculation result on the display 24a, may transmit the calculation result to another information processing apparatus via the network 27a, or may store the calculation result in an external storage device.

According to the data processing apparatus 20 and the data processing method as described above, the local fields to be used for calculating ∆E are not stored in the storage unit 32, but are calculated from the flow amounts and the distances concerning the two facilities as the targets for the flip determination and the arrangement locations thereof. Thus, the storage unit 32 does not have to hold the local fields (also the weight values), and a large scale problem may be calculated even when the storage unit 32 is a small-capacity memory.

For example, when n = 1024 and the data volume of each of the local fields, the flow amounts, and the distances is 4 bytes, the data volume of the matrix W of the weight values is $1024 \times 1024 \times 1024 \times 1024 \times 4 = 4$ TB. On the other hand, the total data volume of the matrix F of the flow amounts and the matrix D of the distances is 8 MB. Therefore, the data volume to be stored may be reduced by 99.9% as compared with the case where the matrix W of the weight values is stored as it is.

In the case where the matrix H of the local fields, the matrix F, and the matrix D each having n rows and n columns are stored without storing the matrix W, the data volume increases as the number of replicas increases.

For example, when n = 1024, the number of replicas = 32, and the data volume of each of the local fields, the flow amounts, and the distances is 4 bytes, the data volume to be stored is calculated as the data volume of the matrix H + the data volume of the matrix F + the data volume of the matrix D = $34 \times 4$ MB = 136 MB. On the other hand, the total data volume of the matrix F of the flow amounts and the matrix D of the distances is 8 MB as described above. Therefore, the data volume may be reduced by 94.1% as compared with the case where the matrix H is stored.

According to the data processing apparatus 20 and the data processing method of the second embodiment, the amount of computation may be reduced as compared with the case where the matrix H of the local fields is used. For example, in the case where the matrix H of the local fields is used, the number of multiplications for one flip determination and update of the matrix H along with an update of the arrangement information where n = 1024 is calculated as $1024 \times 1024 + 1 = 1048577$ from Formulas (8) and (9). In contrast, in the data processing apparatus 20 and the data processing method according to the second embodiment, the matrix H is not updated and the number of multiplications for one flip determination where n = 1024 is calculated as $1024 \times 4 + 1 = 4097$ from Formulas (8) and (10). For example, the number of multiplications may be reduced by 99.6% as compared with the case where the matrix H of the local fields is used.

As described above, the above-described processing may be implemented by causing the data processing apparatus 20 to execute a program.

The program may be recorded in a computer-readable recording medium (for example, the recording medium 26a). As the recording medium, for example, a magnetic disk, an optical disk, a magneto-optical disk, a semiconductor memory, or the like may be used. The magnetic disks include an FD and an HDD. The optical disks include a CD, a CD-recordable (R)/rewritable (RW), a DVD, and a DVD-R/RW. The program may be recorded in a portable recording medium to be distributed. In this case, the program may be copied from the portable recording medium to another recording medium (for example, the HDD 23) to be executed.

(Third Embodiment)

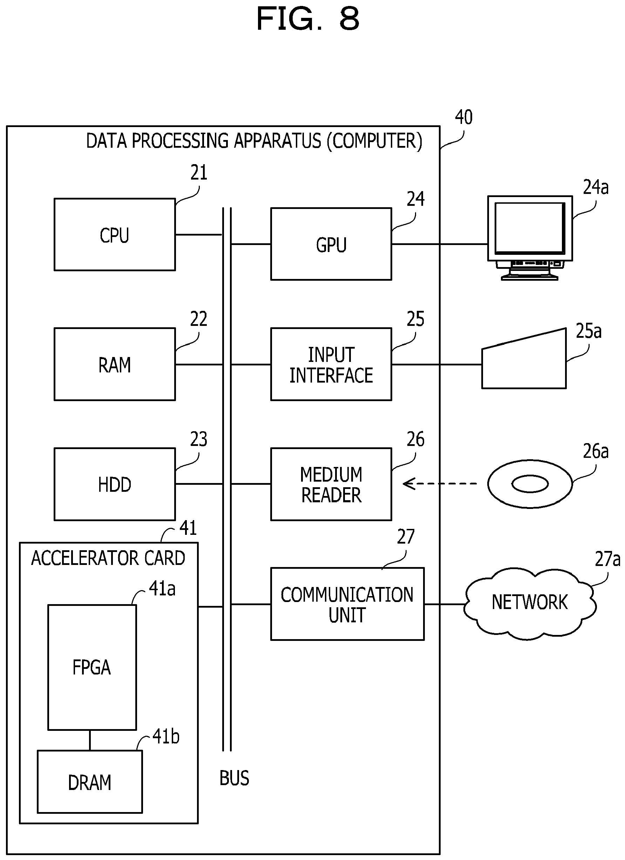

FIG. 8 is a diagram illustrating an example of a data processing apparatus according to a third embodiment. In FIG. 8, the same elements as the elements illustrated in FIG. 5 are assigned with the same reference signs.

A data processing apparatus 40 according to the third embodiment includes an accelerator card 41 coupled to a bus.

The accelerator card 41 is a hardware accelerator that searches for a solution to a quadratic assignment problem. The accelerator card 41 includes an FPGA 41a and a DRAM 41b.

In the data processing apparatus 40 according to the third embodiment, the FPGA 41a performs, for example, the processes by the control unit 31 and the search unit 33 illustrated in FIG. 6.

The DRAM 41b functions as the storage unit 32 illustrated in FIG. 6.

There may be provided multiple accelerator cards 41. In this case, for example, the processes (for example, the processes at steps S13 to S16 in FIG. 7) for each replica may be performed in parallel.

The data processing apparatus 40 according to the third embodiment described above also produces the same effect as that of the data processing apparatus 20 according to the second embodiment.

Although aspects of the program, the data processing method, and the data processing apparatus of the present disclosure have been described above based on the embodiments, the embodiments are merely examples and the present disclosure is not to be limited to the above description.

**Claims**

1.  A program in which a computer searches for a combination of n elements and n assignment locations to which the n elements are assigned, where n is an integer of 2 or more, performs processing to:

    performing a process that includes:

    specifying a first element and a second element among the n elements,
    reading n costs for each of the first element and the second element and n distances for each of a first assignment location of the first element and a second assignment location of the second element from a memory that stores costs between the n elements, distances between the n assignment locations, and assignment states of the n elements to the n assignment locations,
    calculating four local fields indicating a first change amount in a value of an evaluation function that is an Ising type evaluation function representing energy depending on the assignment states and including $n^2$ state variables indicating the assignment states due to changes in values of four state variables in which the values change due to an exchange of the assignment locations between the first element and the second element among the $n^2$ state variables, by using a total sum of products of the n costs and the respective n distances,
    obtaining a second change amount in the value of the evaluation function in a case where the exchange is made, based on the four local fields, a first cost between the first element and the second element among the n costs, and a first distance between the first assignment location and the second assignment location among the n distances, and
    determining whether or not to execute the exchange based on the second change amount and a predetermined value; and

    searching for the assignment states that minimize or maximize the value of the evaluation function by iterating the process while changing an element pair serving as the first element and the second element.

2.  The program according to claim 1, wherein
    the predetermined value is a noise value obtained based on a random number and a value of a temperature parameter.

3.  The program according to claim 1 or 2, wherein

    the costs are expressed by a first matrix with n rows and n columns,
    the distances are expressed by a second matrix with n rows and n columns,
    the n costs belong to a row or a column corresponding to an identification number of the first element or the second element in the first matrix, and
    the n distances belong to a row or a column corresponding to an identification number of the first assignment location or the second assignment location in the second matrix.

4.  The program according to any one of claims 1 to 3, the processing further includes selecting one of the n distances as a multiplier for each of the n costs, based on identification information of the n assignment locations to which the n elements are assigned.

5.  The program according to any one of claims 1 to 4, wherein

    the assignment states are stored in the memory for each of a plurality of replicas in which different values are set as the temperature parameter, and
    the processing further includes:

    iterating the process while changing the element pair for each of the plurality of replicas, and
    exchanging the values of the temperature parameter or the assignment states between any two of the plurality of replicas in predetermined cycles.

6. The program according to any one of claims 1 to 5, wherein
the evaluation function is a function including the total sum of the products of the costs and the distances, where each of the costs indicates an amount of supplies transported between the corresponding two of the n elements in a case where the n elements are assigned to the n assignment locations.

7. A data processing method performed by a computer which searches for a combination of n elements and n assignment locations to which the n elements are assigned, where n is an integer of 2 or more, the data processing method comprising:

performing a process that includes:

specifying a first element and a second element among the n elements,
reading n costs for each of the first element and the second element and n distances for each of a first assignment location of the first element and a second assignment location of the second element from a memory that stores costs between the n elements, distances between the n assignment locations, and assignment states of the n elements to the n assignment locations,
calculating four local fields indicating a first change amount in a value of an evaluation function that is an Ising type evaluation function representing energy depending on the assignment states and including $n^2$ state variables indicating the assignment states due to changes in values of four state variables in which the values change due to an exchange of the assignment locations between the first element and the second element among the $n^2$ state variables, by using a total sum of products of the n costs and the respective n distances,
obtaining a second change amount in the value of the evaluation function in a case where the exchange is made, based on the four local fields, a first cost between the first element and the second element among the n costs, and a first distance between the first assignment location and the second assignment location among the n distances, and
determining whether or not to execute the exchange based on the second change amount and a predetermined value; and

searching for the assignment states that minimize or maximize the value of the evaluation function by iterating the processing while changing an element pair serving as the first element and the second element.

8. A data processing apparatus which searches for a combination of n elements and n assignment locations to which the n elements are assigned, where n is an integer of 2 or more, the data processing apparatus comprising;

a storage unit memory configured to store costs between the n elements, distances between the n assignment locations, and assignment states of the n elements to the n assignment locations; and
a processor configured to perform a process that includes:

specifying a first element and a second element among the n elements,
reading n costs for each of the first element and the second element and n distances for each of a first assignment location of the first element and a second assignment location of the second element from the storage unit,
calculating four local fields indicating a first change amount in a value of an evaluation function that is an Ising type evaluation function representing energy depending on the assignment states and including $n^2$ state variables indicating the assignment states due to changes in values of four state variables in which the values change due to an exchange of the assignment locations between the first element and the second element among the $n^2$ state variables, by using a total sum of products of the n costs and the respective n distances,
obtaining a second change amount in the value of the evaluation function in a case where the exchange is made, based on the four local fields, a first cost between the first element and the second element among the n costs, and a first distance between the first assignment location and the second assignment location among the n distances, and
determining whether or not to execute the exchange based on the second change amount and a predetermined value, and

search for the assignment states that minimize or maximize the value of the evaluation function by iterating the processing while changing an element pair serving as the first element and the second element.

**Amended claims in accordance with Rule 137(2) EPC.**

1. A program comprising instructions causing a computer to search for a combination of n elements and n assignment locations to which the n elements are assigned, where n is an integer of 2 or more, and performs processing of: performing a process that includes:

   reading, from a memory that stores a cost between an element identified by an element identification number as a row number of a first matrix (F) with n rows and n columns and an element identified by an element identification number as a column number of the first matrix (F), a distance between a location, which corresponds to an assignment location of the element, identified by a location identification number as a row number of a second matrix (D) with n rows and n columns and a location identified by an location identification number as a column number of the second matrix (D), and assignment states of assignment locations of n elements identified by element identification numbers as a row number of a third matrix (X) with n rows and n columns and location identification numbers as a column number of the third matrix (X), n costs for each of a first element identified by a first element identification number and the second element identified by a second element identification number and n distances for each of a first assignment location of the first element and a second assignment location of the second element,
   calculating four local fields indicating a first change amount in an energy of an evaluation function, which is an Ising type evaluation function representing energy depending on the assignment states, due to changes of four state variables of which values change due to an exchange of a row indicating the assignment locations of the first element and the second element among the $n^2$ state variables indicating the assignment states in the third matrix (X) and corresponding to the respective four state variables, by using a total sum of products of the n costs and the respective n distances,
   obtaining a second change amount in the value of the evaluation function in a case where the exchange is made, based on the four local fields, a first cost between the first element and the second element among the n costs, and a first distance between the first assignment location and the second assignment location among the n distances, and
   determining whether or not to execute the exchange based on the second change amount and a predetermined value; and
   searching for the assignment states that minimize or maximize the value of the evaluation function by iterating the process while changing an element pair serving as the first element and the second element.

2. The program according to claim 1, wherein
   the predetermined value is a noise value obtained based on a random number and a value of a temperature parameter.

3. The program according to claim 1 or 2, the processing further includes selecting one of the n distances as a multiplier for each of the n costs, based on identification information of the n assignment locations to which the n elements are assigned.

4. The program according to any one of claims 1 to 3, wherein

   the assignment states are stored in the memory for each of a plurality of replicas in which different values are set as the temperature parameter, and
   the processing further includes:

   iterating the process while changing the element pair for each of the plurality of replicas, and
   exchanging the values of the temperature parameter or the assignment states between any two of the plurality of replicas in predetermined cycles.

5. The program according to any one of claims 1 to 4, wherein
   the evaluation function is a function including the total sum of the products of the costs and the distances, where each of the costs indicates an amount of supplies transported between the corresponding two of the n elements in a case where the n elements are assigned to the n assignment locations.

6. A data processing method performed by a computer which searches for a combination of n elements and n assignment locations to which the n elements are assigned, where n is an integer of 2 or more, the data processing method comprising:

performing a process that includes:

reading, from a memory that stores a cost between an element identified by an element identification number as a row number of a first matrix (F) with n rows and n columns and an element identified by an element identification number as a column number of the first matrix (F), a distance between a location, which corresponds to an assignment location of the element, identified by a location identification number as a row number of a second matrix (D) with n rows and n columns and a location identified by an location identification number as a column number of the second matrix (D), and assignment states of assignment locations of n elements identified by element identification numbers as a row number of a third matrix (X) with n rows and n columns and location identification numbers as a column number of the third matrix (X), n costs for each of a first element identified by a first element identification number and a second element identified by a second element identification number and n distances for each of a first assignment location of the first element and a second assignment location of the second element,

calculating four local fields indicating a first change amount in a value of an evaluation function, which is an Ising type evaluation function representing energy depending on the assignment states, due to changes of four state variables of which values change due to an exchange of a row indicating the assignment locations of the first element and the second element among the n2 state variables indicating the assignment states in the third matrix (X) and corresponding to the respective four state variables, by using a total sum of products of the n costs and the respective n distances,

obtaining a second change amount in the value of the evaluation function in a case where the exchange is made, based on the four local fields, a first cost between the first element and the second element among the n costs, and a first distance between the first assignment location and the second assignment location among the n distances, and

determining whether or not to execute the exchange based on the second change amount and a predetermined value; and

searching for the assignment states that minimize or maximize the value of the evaluation function by iterating the processing while changing an element pair serving as the first element and the second element.

7. A data processing apparatus which searches for a combination of n elements and n assignment locations to which the n elements are assigned, where n is an integer of 2 or more, the data processing apparatus comprising;

a storage unit memory configured to store costs between the n elements, distances between the n assignment locations, and assignment states of the n elements to the n assignment locations; and

a processor configured to perform a process that includes:

reading, from a storage unit that stores a cost between an element identified by an element identification number as a row number of a first matrix (F) with n rows and n columns and an element identified by an element identification number as a column number of the first matrix (F), a distance between a location, which corresponds to an assignment location of the element, identified by a location identification number as a row number of a second matrix (D) with n rows and n columns and a location identified by an location identification number as a column number of the second matrix (D), and assignment states of assignment locations of n elements identified by element identification numbers as a row number of a third matrix (X) with n rows and n columns and location identification numbers as a column number of the third matrix (X), n costs for each of a first element identified by a first element identification number and a second element identified by a second element identification number and n distances for each of a first assignment location of the first element and a second assignment location of the second element,

calculating four local fields indicating a first change amount in a value of an evaluation function, which is an Ising type evaluation function representing energy depending on the assignment states, due to changes of four state variables of which values change due to an exchange a row indicating of the assignment locations of the first element and the second element among the n2 state variables indicating the assignment states in the third matrix (X) and corresponding to the respective four state variables, by using a total sum of products of the n costs and the respective n distances,

obtaining a second change amount in the value of the evaluation function in a case where the exchange is made, based on the four local fields, a first cost between the first element and the second element among the n costs, and a first distance between the first assignment location and the second assignment location among the n distances, and

determining whether or not to execute the exchange based on the second change amount and a predetermined value, and

search for the assignment states that minimize or maximize the value of the evaluation function by iterating the processing while changing an element pair serving as the first element and the second element.

# FIG. 1

**ARRANGEMENT INFORMATION (X)**

LOCATION IDENTIFICATION NUMBER

$1 \cdots \phi(i) \cdots \phi(j) \cdots n$

ELEMENT IDENTIFICATION NUMBER

|   | 1 | $\phi(i)$ | $\phi(j)$ | n |
|---|---|---|---|---|
| 1 | $x_1$ | | | $x_n$ |
| i | | $x_a=1$ | $x_b=0$ | |
| j | | $x_c=0$ | $x_d=1$ | |
| n | | | | $x_{n^2}$ |

**COST INFORMATION (F)**

ELEMENT IDENTIFICATION NUMBER

$1 \cdots\cdots\cdots n$

ELEMENT IDENTIFICATION NUMBER

|   | 1 | | n |
|---|---|---|---|
| 1 | $f_{1,1}$ | $\cdots\cdots\cdots\cdots$ | $f_{1,n}$ |
| i | | | |
| n | $f_{n,1}$ | $\cdots\cdots\cdots\cdots$ | $f_{n,n}$ |

**DISTANCE INFORMATION (D)**

LOCATION IDENTIFICATION NUMBER

$1 \cdots\cdots\cdots n$

POSITION IDENTIFICATION NUMBER

|   | 1 | | n |
|---|---|---|---|
| 1 | $d_{1,1}$ | $\cdots\cdots\cdots$ | $d_{1,n}$ |
| $\phi(i)$ | | | |
| n | $d_{n,1}$ | $\cdots\cdots\cdots$ | $d_{n,n}$ |

S1
SPECIFY ELEMENTS WITH ELEMENT IDENTIFICATION NUMBERS = i AND j

S2
READ COST ($f_A$) AND DISTANCE ($d_B$)

S3
CALCULATE $h_a$, $h_b$, $h_c$, AND $h_d$

S4
CALCULATE $\Delta E$

S5
LOCATION EXCHANGE? — NO / YES

S6
UPDATE X

$$h_k = \sum_{j=1}^{n} f_{A,j} d_{B,\phi(j)}$$

$$A=(k-1)/n+1 \text{、} B=(k-1)\%n+1$$

10
**DATA PROCESSING APPARATUS**

12
PROCESSING UNIT

11
STORAGE UNIT

COST INFORMATION (F)

DISTANCE INFORMATION (D)

ARRANGEMENT INFORMATION (X)

# FIG. 2

ROW NUMBER    MATRIX W OF WEIGHT VALUES    STATE VECTOR

# FIG. 3

$$F = \begin{pmatrix} f_{1,1} & f_{1,2} & f_{1,3} \\ f_{2,1} & f_{2,2} & f_{2,3} \\ f_{3,1} & f_{3,2} & f_{3,3} \end{pmatrix} \quad D = \begin{pmatrix} d_{1,1} & d_{1,2} & d_{1,3} \\ d_{2,1} & d_{2,2} & d_{2,3} \\ d_{3,1} & d_{3,2} & d_{3,3} \end{pmatrix}$$

$$W = \begin{pmatrix}
f_{1,1}d_{1,1} & f_{1,1}d_{1,2} & f_{1,1}d_{1,3} & f_{1,2}d_{1,1} & f_{1,2}d_{1,2} & f_{1,2}d_{1,3} & f_{1,3}d_{1,1} & f_{1,3}d_{1,2} & f_{1,3}d_{1,3} \\
f_{1,1}d_{2,1} & f_{1,1}d_{2,2} & f_{1,1}d_{2,3} & f_{1,2}d_{2,1} & f_{1,2}d_{2,2} & f_{1,2}d_{2,3} & f_{1,3}d_{2,1} & f_{1,3}d_{2,2} & f_{1,3}d_{2,3} \\
f_{1,1}d_{3,1} & f_{1,1}d_{3,2} & f_{1,1}d_{3,3} & f_{1,2}d_{3,1} & f_{1,2}d_{3,2} & f_{1,2}d_{3,3} & f_{1,3}d_{3,1} & f_{1,3}d_{3,2} & f_{1,3}d_{3,3} \\
f_{2,1}d_{1,1} & f_{2,1}d_{1,2} & f_{2,1}d_{1,3} & f_{2,2}d_{1,1} & f_{2,2}d_{1,2} & f_{2,2}d_{1,1} & f_{2,3}d_{1,1} & f_{2,3}d_{1,2} & f_{2,3}d_{1,3} \\
f_{2,1}d_{2,1} & f_{2,1}d_{2,2} & f_{2,1}d_{2,3} & f_{2,2}d_{2,1} & f_{2,2}d_{2,2} & f_{2,2}d_{2,3} & f_{2,3}d_{2,1} & f_{2,3}d_{2,2} & f_{2,3}d_{2,3} \\
f_{2,1}d_{3,1} & f_{2,1}d_{3,2} & f_{2,1}d_{3,3} & f_{2,2}d_{3,1} & f_{2,2}d_{3,2} & f_{2,2}d_{3,3} & f_{2,3}d_{3,1} & f_{2,3}d_{3,2} & f_{2,3}d_{3,3} \\
f_{3,1}d_{1,1} & f_{3,1}d_{1,2} & f_{3,1}d_{1,3} & f_{3,2}d_{1,1} & f_{3,2}d_{1,2} & f_{3,2}d_{1,3} & f_{3,3}d_{1,1} & f_{3,1}d_{1,2} & f_{3,3}d_{1,3} \\
f_{3,1}d_{2,1} & f_{3,1}d_{2,2} & f_{3,1}d_{2,3} & f_{3,2}d_{2,1} & f_{3,2}d_{2,2} & f_{3,2}d_{2,3} & f_{3,3}d_{2,1} & f_{3,1}d_{2,2} & f_{3,3}d_{2,3} \\
f_{3,1}d_{3,1} & f_{3,1}d_{3,2} & f_{3,1}d_{3,3} & f_{3,2}d_{3,1} & f_{3,2}d_{3,2} & f_{3,2}d_{3,3} & f_{3,3}d_{3,1} & f_{3,1}d_{3,2} & f_{3,3}d_{3,3}
\end{pmatrix}$$

# FIG. 4

FACILITY IDENTIFICATION
NUMBER = 3

LOCATION IDENTIFICATION
NUMBER = 1

FACILITY IDENTIFICATION
NUMBER = 1

$d_{1,2}$

$d_{1,3}$

FACILITY IDENTIFICATION
NUMBER = 2

$d_{2,3}$

LOCATION IDENTIFICATION
NUMBER = 2

LOCATION IDENTIFICATION
NUMBER = 3

$$F=\begin{pmatrix} 0 & f_{1,2} & f_{1,3} \\ f_{1,2} & 0 & f_{2,3} \\ f_{1,3} & f_{2,3} & 0 \end{pmatrix}$$

$$D=\begin{pmatrix} 0 & d_{1,2} & d_{1,3} \\ d_{1,2} & 0 & d_{2,3} \\ d_{1,3} & d_{2,3} & 0 \end{pmatrix}$$

$$X=\begin{pmatrix} 0 & 1 & 0 \\ 0 & 0 & 1 \\ 1 & 0 & 0 \end{pmatrix}$$

$\phi(j)=[2,3,1]$

# FIG. 5

DATA PROCESSING APPARATUS (COMPUTER) 20

21 CPU

24 GPU

24a

22 RAM

25 INPUT INTERFACE

25a

23 HDD

26 MEDIUM READER

26a

27 COMMUNICATION INTERFACE

27a NETWORK

BUS

# FIG. 6

20

DATA PROCESSING APPARATUS

30

INPUT UNIT

31

CONTROL UNIT

32

STORAGE UNIT

33

SEARCH UNIT

34

OUTPUT UNIT

# FIG. 7

```
                    ┌─────────────┐
                    │    START    │
                    └─────────────┘
                           │
                           ▼
          ┌──────────────────────────────────┐
          │          RECEIVE INPUT           │── S10
          └──────────────────────────────────┘
                           │
                           ▼
          ┌──────────────────────────────────┐
          │     INITIALIZE (rA = 0, rB = 1)  │── S11
          └──────────────────────────────────┘
                           │
                           ▼
          ┌──────────────────────────────────┐
          │          SELECT REPLICA          │── S12
          └──────────────────────────────────┘
                           │
                           ▼
          ┌──────────────────────────────────┐
          │  CALCULATE $h_a$, $h_b$, $h_c$, AND $h_d$  │── S13
          └──────────────────────────────────┘
                           │
                           ▼
          ┌──────────────────────────────────┐
          │          CALCULATE ΔE            │── S14
          └──────────────────────────────────┘
                           │
                           ▼
                   S15
          ◇ LOCATION EXCHANGE? ◇──── NO
                   │ YES
                   ▼
          ┌──────────────────────────────────┐
          │          UPDATE X AND E          │── S16
          └──────────────────────────────────┘
                   │
                   ▼
          S17
  NO ◇ HAVE ALL REPLICAS BEEN SELECTED? ◇
                   │ YES
                   ▼
          ┌──────────────────────────────────┐
          │   UPDATE SEARCH LOCATIONS (rA, rB)  │── S18
          └──────────────────────────────────┘
                   │
                   ▼
                   S19
          ◇ REPLICA EXCHANGE CYCLE? ◇──── NO
                   │ YES
                   ▼
          ┌──────────────────────────────────┐
          │   PERFORM REPLICA EXCHANGE PROCESS  │── S20
          └──────────────────────────────────┘
                   │
                   ▼
                   S21
          ◇ FLIP DETERMINATION COUNT = END COUNT? ◇──── NO
                   │ YES
                   ▼
          ┌──────────────────────────────────┐
          │     OUTPUT CALCULATION RESULT    │── S22
          └──────────────────────────────────┘
                   │
                   ▼
            ┌─────────────┐
            │     END     │
            └─────────────┘
```

# FIG. 8

DATA PROCESSING APPARATUS (COMPUTER) 40

CPU 21

GPU 24 — 24a

RAM 22

INPUT INTERFACE 25 — 25a

HDD 23

MEDIUM READER 26 — 26a

ACCELERATOR CARD 41

FPGA 41a

DRAM 41b

COMMUNICATION UNIT 27 — NETWORK 27a

BUS

Europäisches
Patentamt

European
Patent Office

Office européen
des brevets

# EUROPEAN SEARCH REPORT

**Application Number**

**EP 21 21 5952**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAGHERBEIK MOHAMMAD ET AL: "A Permutational Boltzmann Machine with Parallel Tempering for Solving Combinatorial Optimization Problems", 31 August 2020 (2020-08-31), COMPUTER VISION – ECCV 2020 : 16TH EUROPEAN CONFERENCE, GLASGOW, UK, AUGUST 23-28, 2020 : PROCEEDINGS; [LECTURE NOTES IN COMPUTER SCIENCE ; ISSN 0302-9743], SPRINGER INTERNATIONAL PUBLISHING, CHAM, PAGE(S) 317 – 331, XP047560373, ISBN: 978-3-030-58594-5 [retrieved on 2020-08-31] * abstract * * chapters 1 – 6; page 317 – page 329; figures 1-5; tables 1-3 * | 1-8 | INV. G06N5/00 G06N7/00 G06N3/04 |
| | ----- | | |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 8 June 2022 | Hasnas, Sergiu |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019185602 A

- JP 2020194442 A